# EUROPEAN PATENT APPLICATION

(11) **EP 4 783 404 A1**
(43) Date of publication of application: **29.07.2026**
(21) Application number: 24870249.0
(22) Date of filing: 23.08.2024
(51) Int. Cl.: H02J 7/00, H02J 50/10

(54) **POWER SUPPLY DEVICE, POWERED DEVICE AND CHARGING METHOD**

(30) Priority: 28.09.2023 CN 202311287676
(71) Applicant: HUAWEI TECHNOLOGIES CO., LTD., Shenzhen 518129 (CN)
(72) Inventor: GUO, Chunlong, Shenzhen, Guangdong 518129 (CN); DENG, Mingjin, Shenzhen, Guangdong 518129 (CN); YAO, Liang, Shenzhen, Guangdong 518129 (CN); HUAN, Min, Shenzhen, Guangdong 518129 (CN); BAI, Jun, Shenzhen, Guangdong 518129 (CN)
(74) Representative: Gill Jennings & Every LLP
(86) International application number: PCT/CN2024/114207
(87) International publication number: WO 2025/066703

(57) **Abstract**

Embodiments of this application provide a power supply device, a power receiving device, and a charging method, and are applied to the field of device power supply. A transmission characteristic circuit is disposed in the power receiving device. The power supply device includes a power supply interface. The power supply device is configured to: send a first electrical signal to the transmission characteristic circuit of the power receiving device through the power supply interface in response to the power receiving device being coupled to the power supply interface; receive a second electrical signal from the transmission characteristic circuit of the power receiving device through the power supply interface, where the second electrical signal is the first electrical signal transmitted through the transmission characteristic circuit; and when a characteristic electrical signal parameter of the second electrical signal is within a preset range, send a power supply signal to the power receiving device through the power supply interface, where the characteristic electrical signal parameter is an electrical signal parameter affected by a transmission characteristic of the power receiving device. In embodiments of this application, power supply identification and negotiation between the power supply device and the power receiving device are implemented based on a transmission characteristic circuit of hardware, which improves power supply reliability and safety while reducing component costs and component area overheads.

## Description

This application claims priority to Chinese Patent Application No. 2023112876769, filed with the China National Intellectual Property Administration on September 28, 2023 and entitled "POWER SUPPLY DEVICE, POWER RECEIVING DEVICE, AND CHARGING METHOD", which is incorporated herein by reference in its entirety.

### TECHNICAL FIELD

This application relates to the field of device power supply technologies, and in particular, to a power supply device, a power receiving device, and a charging method.

### BACKGROUND

A power supply device provides a power supply signal for a power receiving device, to ensure normal working and running of the power receiving device. However, different power receiving devices require different parameters for power supply signals. If the power supply signal with an unmatched parameter is provided, damage may be caused to the power supply device and/or the power receiving device, damage may even be caused to device networking, a fire may be caused, and the like. To ensure power supply safety, a dedicated power supply device may be disposed, and a power supply signal with a fixed parameter is provided, which is dedicated for use by a specific power receiving device. However, during actual application, a user usually uses the power supply device to supply power to different power receiving devices. In this case, there is a high probability that a parameter of a power supply signal actually provided by the power supply device does not match a parameter of a power supply signal required by a power receiving device, causing a power supply safety problem. When one power supply device includes a plurality of power supply interfaces and needs to supply power to a plurality of power receiving devices, a probability of occurrence of the power supply safety problem is higher.

A solution is to dispose a power manager for each power supply interface, and correspondingly dispose the power manager in the power receiving device. Authorization and identification of an authenticated power receiving device, negotiation of a power supply parameter, and the like are performed through interaction between power managers, thereby ensuring power supply safety and reliability. However, this manner may increase component costs of the devices and increase component area overheads of the devices. Especially, when the power supply device includes a plurality of power supply interfaces, the power manager needs to be correspondingly disposed for each power supply interface, which leads to higher component costs and component area overheads.

### SUMMARY

Embodiments of this application provide a power supply device, a power receiving device, and a charging method, to reduce component area overheads and component costs of the devices while ensuring power supply safety and reliability.

To achieve the foregoing objectives, the following technical solutions are used in embodiments of this application.

According to a first aspect, a power supply device is provided. The power supply device includes a power supply interface. The power supply device is configured to: send a first electrical signal to the power receiving device through the power supply interface in response to a power receiving device being coupled to the power supply interface; receive a second electrical signal from the power receiving device through the power supply interface, where the second electrical signal is the first electrical signal transmitted through the power receiving device; and when a characteristic electrical signal parameter of the second electrical signal is within a preset range, send a power supply signal to the power receiving device through the power supply interface, where the characteristic electrical signal parameter is a characteristic electrical signal parameter affected by a transmission characteristic of the power receiving device.

In this embodiment of this application, the power receiving device changes a characteristic of a characteristic electrical signal parameter of the first electrical signal. This causes a change within a predictable extent and range to the characteristic electrical signal parameter of the first electrical signal. The power supply device sends the first electrical signal to the power receiving device, and receives, from the power receiving device, the second electrical signal obtained after the first electrical signal is transmitted through the power receiving device. When the characteristic electrical signal parameter of the first electrical signal is known, whether the power receiving device is an authenticated power receiving device may be determined by determining whether the characteristic electrical signal parameter of the second electrical signal is within the preset range. If the characteristic electrical signal parameter of the second electrical signal is within the preset range, it may be determined that a corresponding power receiving device is the authenticated power receiving device, and the power supply signal may be provided for the power receiving device. In the foregoing implementation, power supply identification and negotiation between the power receiving device and the power supply device may be implemented via hardware, which avoids power supply identification and negotiation between the power receiving device and the power supply device by using a power manager, and improves power supply safety and reliability while reducing component costs and component area overheads.

In a possible implementation, the characteristic electrical signal parameter of the second electrical signal further indicates a power receiving parameter of the power receiving device. The power supply device is further configured to: determine a value of a power supply parameter of the power supply signal based on the characteristic electrical signal parameter of the second electrical signal. In this embodiment of this application, the transmission characteristic of the power receiving device may be designed, so that in a process of transmitting the first electrical signal through the power receiving device, a change of the characteristic electrical signal parameter may further indicate the power receiving parameter of the power receiving device. The power supply device determines the power receiving parameter of the power receiving device based on the characteristic electrical signal parameter of the second electrical signal, and generates the power supply signal corresponding to the power supply parameter. In the foregoing implementation, a power supply matching degree between the power supply signal and power receiving devices of different models or in different application scenarios can be improved, to improve working efficiency of the power receiving device, and improve running reliability and safety.

In a possible implementation, the characteristic electrical signal parameter includes at least one of the following: a phase change characteristic, an amplitude change characteristic, and a frequency change characteristic. In this embodiment of this application, in a process of transmitting the first electrical signal through the power receiving device, a device identifier, the power receiving parameter, and/or the like of the power receiving device may be indicated based on a changed parameter characteristic by changing at least one of a phase, an amplitude, or a frequency of the first electrical signal. A corresponding characteristic parameter or the like may be selected based on an actual application scenario requirement.

In a possible implementation, the characteristic electrical signal parameter includes at least one of a time-varying characteristic or a noise characteristic. In this embodiment of this application, in addition to changing a signal characteristic of the first electrical signal, transmission time or the like of the first electrical signal may also be changed. Alternatively, a distinguishing feature generated with transmission time in the process of transmitting the first electrical signal in the power receiving device is detected, to identify the device identifier and/or the power receiving parameter. In addition, some interference noise signals may be added to the first electrical signal, and the device identifier and/or the power receiving parameter are identified based on the interference noise signals. In the foregoing implementation, precision, a difference degree, and the like of power supply identification and negotiation may be increased, and may also allow the implementation to adapt to different application scenarios in more identification manners.

In a possible implementation, the power supply device includes a plurality of power supply interfaces. The plurality of power supply interfaces are used to be coupled to a plurality of corresponding power receiving devices. In this embodiment of this application, one power supply device may be used to supply power to a plurality of power receiving devices. In this case, power supply identification and negotiation between the power supply device and the plurality of power receiving devices are implemented based on a hardware transmission characteristic of the power receiving device. This can reduce a larger quantity of disposed power managers. In the foregoing implementation, power supply reliability and safety in an application scenario in which one power supply device supplies power to a plurality of power receiving devices can be improved while component costs and component area overheads are reduced.

In a possible implementation, the power supply interface includes a power supply pin and a detection pin. The power supply device sends the power supply signal to the power receiving device through the power supply pin, and the power supply device receives the second electrical signal from the power receiving device through the detection pin. In this embodiment of this application, the power supply device may transmit the power supply signal and the second electrical signal through different pins, to ensure processing precision and the like of power supply identification and negotiation.

In a possible implementation, the power supply device sends the first electrical signal to the power receiving device through the power supply pin. In this embodiment of this application, the power supply pin may be reused to transmit the power supply signal and the first electrical signal, to reduce a quantity of disposed pins and improve an integration level. In addition, in some scenarios, an existing interface may be directly used as the power supply interface, and the interface does not need to be modified. In some other scenarios, only the detection pin needs to be added to an existing interface, to reduce a quantity of newly added pins.

In a possible implementation, the power supply device further includes an excitation pin, and the power supply device sends the first electrical signal to the power receiving device through the excitation pin. In this embodiment of this application, different pins may be used to transmit the power supply signal and the first electrical signal respectively. This increases reliability of transmission of different signals, and also reduces an amount of data for performing signal processing on the second electrical signal.

In a possible implementation, the power supply device further includes an excitation signal source, a control circuit, and a power supply unit. The control circuit is separately coupled to the power supply interface and the power supply unit, and the power supply unit is coupled to the power supply interface. The excitation signal source is configured to send the first electrical signal to the power receiving device through the power supply interface. The control circuit is configured to: input the second electrical signal at the power supply interface; and when the characteristic electrical signal parameter of the second electrical signal is within the preset range, output a first control signal to the power supply unit through the power supply interface, where the first control signal indicates to supply power to the power receiving device. The power supply unit is configured to send the power supply signal to the power receiving device through the power supply interface based on the first control signal. In this embodiment of this application, the determined first electrical signal may be provided by using the excitation signal source. The control circuit is used to process the second electrical signal, complete power supply identification and negotiation with the power receiving device, and then output the first control signal to the power supply unit based on a result of power supply identification and negotiation. The power supply unit is controlled by using the first control signal to output the power supply signal. In addition, the power supply parameter of the power supply signal that is output by the power supply unit may be further controlled by using the first control signal.

In a possible implementation, the control circuit is a power manager. In this embodiment of this application, compared with using another processor as the control circuit, when the power manager is used as the control circuit, an amount of data to be processed can be reduced, and efficiency of power supply identification and negotiation can be improved.

According to a second aspect, an embodiment of this application further provides a power receiving device. The power receiving device includes a transmission characteristic circuit and a power receiving interface. An input of the transmission characteristic circuit and an output of the transmission characteristic circuit are separately coupled to the power receiving interface. The power receiving device is configured to: receive a first electrical signal from a power supply device through the power receiving interface at the input of the transmission characteristic circuit, and transmit the first electrical signal by using the transmission characteristic circuit; send a second electrical signal to the power supply device through the power receiving interface at the output of the transmission characteristic circuit, where the second electrical signal is the first electrical signal transmitted through the transmission characteristic circuit, and a transmission characteristic of the transmission characteristic circuit is used to change a characteristic electrical signal parameter of the first electrical signal to obtain the second electrical signal; and receive a power supply signal from the power supply device through the power receiving interface. In this embodiment of this application, the transmission characteristic circuit is disposed in the power receiving device, and the transmission characteristic circuit transmits the first electrical signal and outputs the second electrical signal. The transmission characteristic of the transmission characteristic circuit is designed, so that the characteristic electrical signal parameter of the first electrical signal is changed to obtain the second electrical signal. A characteristic electrical signal parameter of the second electrical signal may indicate a device identifier of the power receiving device. The device identifier of the power receiving device indicates whether the power receiving device is an authenticated power receiving device. After receiving the second electrical signal, the power supply device determines, based on the second electrical signal, that the power receiving device is the authenticated power receiving device, and provides the power supply signal for the power receiving device. The power receiving device may receive the power supply signal to work normally.

In a possible implementation, the transmission characteristic of the transmission characteristic circuit further indicates a power receiving parameter of the power receiving device.

In a possible implementation, the characteristic electrical signal parameter includes at least one of the following: a phase change characteristic, an amplitude change characteristic, and a frequency change characteristic.

In a possible implementation, the characteristic electrical signal parameter includes at least one of a time-varying characteristic or a noise characteristic.

In a possible implementation, the transmission characteristic circuit includes at least one of the following components: an equivalent capacitor, an equivalent resistor, and an equivalent inductor. In this embodiment of this application, the transmission characteristic of the transmission characteristic circuit may be designed by using a component such as a capacitor, a resistor, or an inductor. Alternatively, another component may be used to equivalently form a capacitor, a resistor, or an inductor. For example, a capacitor structure is equivalently obtained by using a structure such as a metal plate or a metal wire in the component. A resistance load, an inductor load, or the like is equivalently obtained by using a cable in the component. A transmission line, a microstrip, an impedance conversion line, or the like is used to equivalently obtain an impedance characteristic, a transmission characteristic, and the like of the capacitor, the resistor, or the inductor.

In a possible implementation, the power receiving interface includes a power receiving pin and a feedback pin. The power receiving device receives the power supply signal from the power supply device through the power receiving pin, and the power receiving device sends the second electrical signal to the power receiving device through the feedback pin.

In a possible implementation, the power receiving device receives the first electrical signal from the power supply device through the power receiving pin.

In a possible implementation, the power receiving device further includes an excitation pin. The power receiving device receives the first electrical signal from the power supply device through the excitation pin.

According to a third aspect, an embodiment of this application further provides a charging method that is based on a power supply device. The method includes: sending a first electrical signal to a power receiving device; receiving a second electrical signal from the power receiving device, where the second electrical signal is the first electrical signal transmitted through the power receiving device; and when a characteristic electrical signal parameter of the second electrical signal is within a preset range, sending a power supply signal to the power receiving device, where the characteristic electrical signal parameter is a characteristic electrical signal parameter affected by a transmission characteristic of the power receiving device.

In a possible implementation, the characteristic electrical signal parameter of the second electrical signal further indicates a power receiving parameter of the power receiving device. The method further includes: determining a value of a power supply parameter of the power supply signal based on the characteristic electrical signal parameter of the second electrical signal.

In a possible implementation, the characteristic electrical signal parameter includes at least one of the following: a phase change characteristic, an amplitude change characteristic, and a frequency change characteristic.

In a possible implementation, the characteristic electrical signal parameter includes at least one of a time-varying characteristic or a noise characteristic.

In a possible implementation, sending the power supply signal to the power receiving device includes: obtaining a first control signal based on the second electrical signal, where the first control signal indicates to supply power to the power receiving device; and sending the power supply signal to the power receiving device based on the first control signal.

According to a fourth aspect, an embodiment of this application provides a charging method that is based on a power receiving device. The power receiving device includes a transmission characteristic circuit. The method includes: receiving a first electrical signal, transmitting the first electrical signal by using the transmission characteristic circuit, and sending a second electrical signal to a power supply device, where the second electrical signal is the first electrical signal transmitted through the transmission characteristic circuit, and a transmission characteristic of the transmission characteristic circuit is used to change a characteristic electrical signal parameter of the first electrical signal to obtain the second electrical signal; and receiving a power supply signal from the power supply device.

In a possible implementation, the transmission characteristic of the transmission characteristic circuit further indicates a power receiving parameter of the power receiving device.

In a possible implementation, the characteristic electrical signal parameter includes at least one of the following: a phase change characteristic, an amplitude change characteristic, and a frequency change characteristic.

In a possible implementation, the characteristic electrical signal parameter includes at least one of a time-varying characteristic or a noise characteristic.

According to a fifth aspect, an embodiment of this application further provides device networking. The device networking includes a power supply device and a power receiving device. The power supply device includes a power supply interface, and the power receiving device includes a power receiving interface and a transmission characteristic circuit. The power supply interface is coupled to an input and an output of the transmission characteristic circuit through the power receiving interface. The power supply device is configured to: send a first electrical signal to the input of the transmission characteristic circuit through the power supply interface in response to the power receiving interface being coupled to the power supply interface; receive a second electrical signal from the output of the transmission characteristic circuit through the power supply interface, where the second electrical signal is the first electrical signal transmitted through the transmission characteristic circuit; and when a characteristic electrical signal parameter of the second electrical signal is within a preset range, send a power supply signal to the power receiving device through the power supply interface, where the characteristic electrical signal parameter is a characteristic electrical signal parameter affected by a transmission characteristic of the transmission characteristic circuit.

According to a sixth aspect, an embodiment of this application further provides a computer-readable storage medium. The computer-readable storage medium includes instructions. When the instructions are run on the power supply device described in the first aspect, the power supply device is enabled to perform the following charging method: sending a first electrical signal to a power receiving device; receiving a second electrical signal from the power receiving device, where the second electrical signal is the first electrical signal transmitted through the power receiving device; and when a characteristic electrical signal parameter of the second electrical signal is within a preset range, sending a power supply signal to the power receiving device, where the characteristic electrical signal parameter is a characteristic electrical signal parameter affected by a transmission characteristic of the power receiving device.

For technical principles and beneficial effects of the second aspect, the third aspect, the fourth aspect, the fifth aspect, and the sixth aspect, refer to related descriptions of the first aspect. Details are not described herein again.

### BRIEF DESCRIPTION OF DRAWINGS

FIG. 1 is a diagram of a structure of first device networking according to an embodiment of this application;
FIG. 2 is a diagram 1 of a structure of second device networking according to an embodiment of this application;
FIG. 3 is a diagram of a structure of a first power supply device and a first power receiving device according to an embodiment of this application;
FIG. 4 is a diagram of a structure of a second power supply device and a second power receiving device according to an embodiment of this application;
FIG. 5 is a diagram 1 of a structure of a third power supply device and a third power receiving device according to an embodiment of this application;
FIG. 6A and FIG. 6B are diagrams of a structure of a capacitor-based transmission characteristic circuit according to an embodiment of this application;
FIG. 7 is a diagram 2 of a structure of a third power supply device and a third power receiving device according to an embodiment of this application;
FIG. 8 is a diagram 3 of a structure of a third power supply device and a third power receiving device according to an embodiment of this application;
FIG. 9 is a diagram 2 of a structure of second device networking according to an embodiment of this application;
FIG. 10 is a diagram 3 of a structure of second device networking according to an embodiment of this application;
FIG. 11 is a diagram 4 of a structure of second device networking according to an embodiment of this application;
FIG. 12 is a schematic flowchart of a charging method according to an embodiment of this application; and
FIG. 13 is a schematic flowchart of a charging method according to an embodiment of this application.

### DESCRIPTION OF EMBODIMENTS

It should be noted that the terms "first", "second", and the like in embodiments of this application are merely used to distinguish between features of a same type, and cannot be understood as an indication of relative importance, a quantity, a sequence, or the like.

The term "example", "for example", or the like in embodiments of this application is used to represent an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The terms "coupling" and "connection" in embodiments of this application should be understood in a broad sense. For example, the "connection" may be a physical direct connection, or may be an indirect connection implemented through an electronic component, for example, a connection implemented through a resistor, an inductor, a capacitor, or another electronic component.

An embodiment of this application provides device networking. The device networking includes a power supply device and a power receiving device.

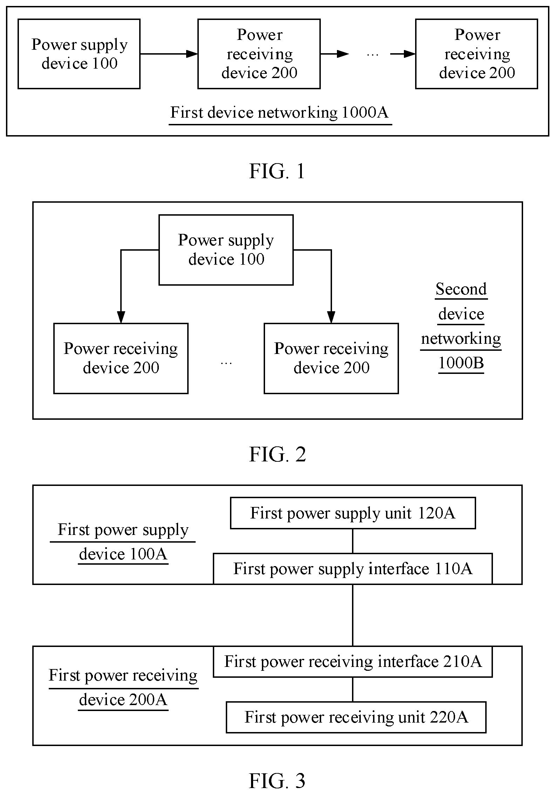

In some possible implementations, when the device networking includes a plurality of power receiving devices, the device networking may be first device networking of a chain structure. As shown in FIG. 1, a plurality of power receiving devices 200 are disposed in the first device networking 1000A of the chain structure. The plurality of power receiving devices 200 are coupled in a chain cascade. A power supply device 100 supplies power to a first-level power receiving device 200 in the chain structure. In the plurality of cascaded power receiving devices 200, a previous power receiving device 200 supplies power to a following power receiving device 200. However, in this implementation, if one of the plurality of cascaded power receiving devices 200 is faulty, normal working of a power receiving device 200 following the faulty power receiving device 200 is affected. Therefore, running reliability and security of the first device networking 1000A in the chain structure are not high, and independent working of the plurality of power receiving devices 200 cannot be ensured.

In some possible implementations, when the device networking includes a plurality of power receiving devices, the device networking may be second device networking of a star structure. As shown in FIG. 2, a plurality of power receiving devices 200 are disposed in the second device networking 1000B of the star structure. The power supply device 100 includes a plurality of power supply interfaces. The power supply device 100 is separately coupled to the plurality of power receiving devices 200 through the plurality of power supply interfaces, to provide power supply signals for the plurality of power receiving devices 200.

In some possible implementations, in the embodiments shown in FIG. 1 and FIG. 2, the power supply device 100 is a first power supply device that does not include a power manager, and the power receiving device 200 is a first power receiving device that does not include a power manager. As shown in FIG. 3, a first power supply device 100A includes a plurality of first power supply interfaces 110A and a first power supply unit 120A. The first power supply unit 120A is separately coupled to the plurality of first power supply interfaces 110A. A first power receiving device 200A includes a first power receiving interface 210A and at least one first power receiving unit 220A. The at least one power receiving unit 220A is coupled to the first power receiving interface 210A. Each first power receiving device 200A is coupled to one first power supply interface 110A of the first power supply device 100A through the first power receiving interface 210A. In this embodiment of this application, the first power supply unit 120A of the first power supply device 100A generates a power supply signal based on a fixed power supply parameter, and transmits the power supply signal to the first power receiving device 200A through a corresponding first power supply interface 110A. After the power supply signal is received through the first power receiving interface 210A of the first power receiving device 200A, the power supply signal is transmitted to one or more corresponding first power receiving units 220A, so that the first power receiving unit 220A receives power and works. In the embodiment shown in FIG. 3, a matching power supply parameter is designed for an authenticated power receiving device 200, and the first power supply unit 120A outputs a power supply signal with the designed power supply parameter, to supply power to the authenticated power receiving device 200. However, this solution is applicable only to a scenario in which all first power receiving devices 200A are authenticated power receiving devices 200. When the first power receiving device 200A coupled to the first power supply interface 110A is an unauthenticated power receiving device 200, the power supply parameter of the power supply signal output through the first power supply interface 110A may not match the unauthenticated power receiving device 200, and a power supply safety problem exists, for example, a problem such as a problem that sparking, arcing, or the like occurs on a power supply line, or a problem that the unauthenticated power receiving device 200 is damaged due to an excessively large power supply signal, or a problem that a power supply drive requirement of the unauthenticated power receiving device 200 is high, and consequently, a voltage or a current of the power supply signal is increased, which causes the first power supply unit 120A of the first power supply device 100A to be damaged.

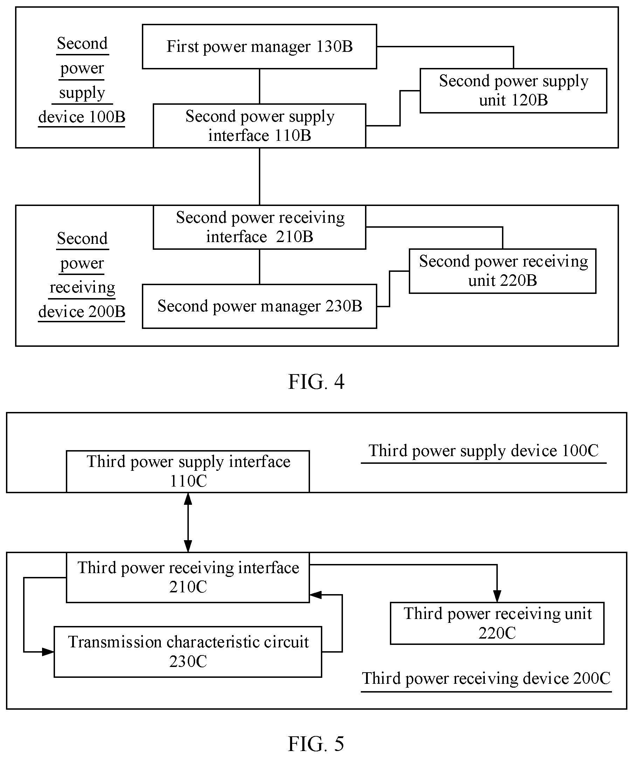

To resolve the power supply safety problem caused by direct power supply in the embodiment shown in FIG. 3, the power supply device 100 may be a second power supply device including a power manager, and the power receiving device 200 is a second power receiving device including a power manager. As shown in FIG. 4, the second power supply device 100B includes a second power supply interface 110B, a second power supply unit 120B, and a first power manager 130B. The first power manager 130B is separately coupled to the second power supply interface 110B and the second power supply unit 120B. The second power receiving device 200B includes a second power receiving interface 210B, at least one second power receiving unit 220B, and a second power manager 230B. After the second power receiving device 200B is coupled to the second power supply interface 110B of the second power supply device 100B through the second power receiving interface 210B, the first power manager 130B starts to exchange a device identity identifier with the second power manager 230B, to identify whether the second power receiving device 200B is an authenticated power receiving device. After determining that the second power receiving device 200B is the authenticated power receiving device, the first power manager 130B may control the second power supply unit 120B to generate a power supply signal that matches a corresponding authenticated power receiving device. In this embodiment of this application, the first power manager 130B is disposed in the second power supply device 100B, and the second power manager 230B is correspondingly disposed in the second power receiving device 200B, to perform power supply negotiation and identification between the second power supply device 100B and the second power receiving device 200B from a software perspective based on a related power supply protocol. This avoids the power supply safety problem caused when power is supplied to an unauthenticated power receiving device. However, in this implementation, component costs of the second power supply device 100B and the second power receiving device 200B are increased, and the power managers also cause specific component area overheads. In addition, when a plurality of second power supply interfaces 110B are disposed in the second power supply device 100B to supply power to a plurality of second power receiving devices 200B, to ensure stability of each second power receiving device 200B, a plurality of first power managers 130B need to be disposed to respectively perform power supply negotiation and identification with different second power receiving devices 200B. In this case, component costs and component area overheads are higher.

To improve power supply safety and reliability without significantly increasing component costs and component area overheads, in some possible implementations, the power supply device 100 may be a third power supply device that implements power supply negotiation and identification based on a hardware transmission characteristic of the power receiving device 200, and the power receiving device 200 may be third power receiving device that implements power supply negotiation and identification based on the hardware transmission characteristic. As shown in FIG. 5, the third power supply device 100C includes a third power supply interface 110C. The third power receiving device 200C includes a third power receiving interface 210C, at least one third power receiving unit 220C, and a transmission characteristic circuit 230C. The third power receiving interface 210C is separately coupled to the at least one third power receiving unit 220C, an input of the transmission characteristic circuit 230C, and an output of the transmission characteristic circuit 230C.

The third power supply device 100C is configured to send a first electrical signal to the third power receiving device 200C through the third power supply interface 110C in response to the third power receiving device 200C being coupled to the third power supply interface 110C.

The third power receiving device 200C is configured to: receive the first electrical signal from the third power supply device 100C through the third power receiving interface 210C at the input of the transmission characteristic circuit 230C, and transmit the first electrical signal by using the transmission characteristic circuit 230C; and send a second electrical signal to the third power supply device 100C through the third power receiving interface 210C at the output of the transmission characteristic circuit 230C, where the second electrical signal is the first electrical signal transmitted through the transmission characteristic circuit 230C, and a transmission characteristic of the transmission characteristic circuit 230C is used to change a characteristic electrical signal parameter of the first electrical signal to obtain the second electrical signal.

The third power supply device 100C is further configured to: receive the second electrical signal from the third power receiving device 200C through the third power supply interface 110C; and when a characteristic electrical signal parameter of the second electrical signal is within a preset range, send a power supply signal to the third power receiving device 200C through the third power supply interface 110C.

The third power receiving device 200C is further configured to receive the power supply signal from the third power supply device 100C through the third power receiving interface 210C.

In this embodiment of this application, for example, the embodiment shown in FIG. 5, the transmission characteristic circuit 230C is disposed in the third power receiving device 200C. After the third power supply interface 110C of the third power supply device 100C is coupled to the third power receiving interface 210C of the third power receiving device 200C, the third power supply device 100C sends the first electrical signal to the input of the transmission characteristic circuit 230C of the third power receiving device 200C through the third power supply interface 110C. After the first electrical signal is transmitted through the transmission characteristic circuit 230C, the second electrical signal affected by the transmission characteristic circuit 230C is fed back to the third power supply device 100C through the third power receiving interface 210C at the output of the transmission characteristic circuit 230C. In this process, because the transmission characteristic circuit 230C affects the characteristic electrical signal parameter of the first electrical signal, the second electrical signal is obtained. Therefore, for an authenticated third power receiving device 200C, a transmission characteristic circuit 230C of a corresponding model is designed, and the designed and obtained transmission characteristic circuit 230C may cause a change within a predictable extent and range to the characteristic electrical signal parameter of the first electrical signal. The third power supply device 100C receives the second electrical signal obtained after transmission through the transmission characteristic circuit 230C. When the characteristic electrical signal parameter of the first electrical signal is known, whether the third power receiving device 200C is an authenticated power receiving device may be determined by determining whether the characteristic electrical signal parameter of the second electrical signal is within the preset range. If the characteristic electrical signal parameter of the second electrical signal is within the preset range, it may be determined that a corresponding third power receiving device 200C is the authenticated power receiving device, and the third power supply device 100C may provide the power supply signal for the third power receiving device 200C. Component costs and component area overheads of the transmission characteristic circuit 230C are far lower than component costs and component area overheads of a power manager. In this embodiment of this application, the transmission characteristic circuit 230C is disposed, so that a quantity of related power managers disposed in the power receiving device can be reduced, and component costs are reduced. In this embodiment of this application, based on the embodiment shown in FIG. 5, power supply safety and reliability can be improved while component costs and a component area are reduced.

In some possible implementations, the transmission characteristic of the transmission characteristic circuit 230C further indicates a power receiving parameter of the third power receiving device 200C. In this case, the characteristic electrical signal parameter of the second electrical signal also further indicates the power receiving parameter of the third power receiving device 200C. The third power supply device 100C is further configured to determine a value of a power supply parameter of the power supply signal based on the characteristic electrical signal parameter of the second electrical signal. In this embodiment of this application, the transmission characteristic of the transmission characteristic circuit 230C is designed, so that different values of the characteristic electrical signal parameter of the second electrical signal may alternatively be used to correspond to different power receiving parameters of the third power receiving device 200C. The third power supply device 100C determines the power receiving parameter of the third power receiving device 200C based on a value of a characteristic electrical signal parameter that corresponds to an actually received second electrical signal, and outputs, based on the power receiving parameter, a power supply signal that corresponds to the value of the power supply parameter, so that the output power supply signal can adapt to third power receiving devices 200C of different models or in different application scenarios.

In some possible implementations, the characteristic electrical signal parameter includes at least one of the following: a phase change characteristic, an amplitude change characteristic, and a frequency change characteristic.

In some possible implementations, the characteristic electrical signal parameter includes at least one of a time-varying characteristic or a noise characteristic.

In some possible implementations, the transmission characteristic circuit 230C includes at least one of the following components: an equivalent capacitor, an equivalent resistor, and an equivalent inductor. In this embodiment of this application, the transmission characteristic circuit 230C may be designed by using a capacitor, a resistor, an inductor, or another component that may be equivalent to the capacitor, the resistor, or the inductor, so that the transmission characteristic circuit 230C can change the characteristic electrical signal parameter.

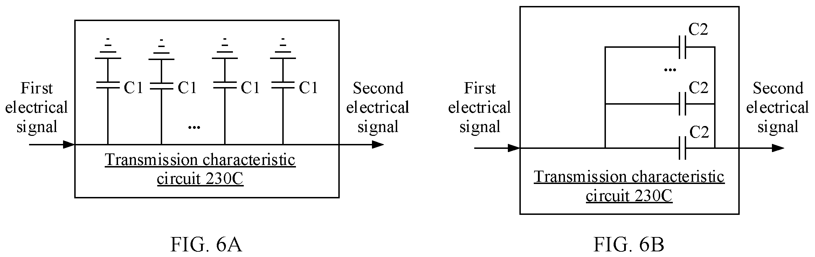

For example, as shown in FIG. 6A and FIG. 6B, an example in which the transmission characteristic circuit 230C includes a capacitor is used. In FIG. 6A, a plurality of grounded capacitors are connected to a transmission path, which can increase a phase of the first electrical signal, to obtain a second electrical signal with a larger phase. In FIG. 6B, a plurality of capacitors that are connected in parallel may reduce a phase of the first electrical signal, to obtain a second electrical signal with a smaller phase. In addition, the capacitors in FIG. 6A and FIG. 6B may be combined to jointly adjust the phase of the first electrical signal.

For example, a plurality of resistors are connected in series and/or in parallel, to obtain a load circuit with different load, and implement functions such as voltage division. This may cause a corresponding amplitude change, a corresponding frequency response, and the like for the first electrical signal.

For example, an inductor is disposed in the transmission characteristic circuit 230C. The inductor may be a result of serial connection and/or parallel connection, and may generate a corresponding frequency response, a corresponding delay, and the like for the first electrical signal.

For example, in the transmission characteristic circuit 230C, a component such as a capacitor, a resistor, or an inductor may be used. Alternatively, another component may be used to equivalently form a capacitor, a resistor, or an inductor. For example, a capacitor structure is equivalently obtained by using a structure such as a metal plate or a metal wire in the component. A resistance load, an inductor load, or the like is equivalently obtained by using a cable in the component. A transmission line, a microstrip, an impedance conversion line, or the like is used to equivalently obtain an impedance characteristic, a transmission characteristic, and the like of the capacitor, the resistor, or the inductor.

In some examples, the third power receiving unit 220C may be a power storage component in the third power receiving device 200C. In some examples, the third power receiving unit 220C may be a working component in the third power receiving device 200C, for example, a data processing component, a control component, or a detection component.

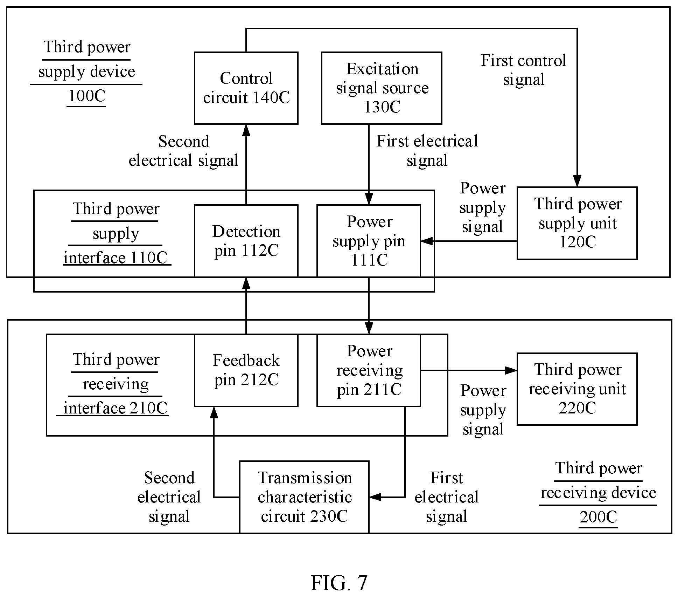

In some possible implementations, as shown in FIG. 7, the third power supply interface 110C includes a power supply pin 111C and a detection pin 112C. The third power supply device 100C sends the power supply signal to the third power receiving device 200C through the power supply pin 111C. The third power supply device 100C receives the second electrical signal from the third power receiving device 200C through the detection pin 112C. The third power receiving interface 210C of the third power receiving device 200C includes a power receiving pin 211C and a feedback pin 212C. The third power receiving device 200C receives the power supply signal from the third power supply device 100C through the power receiving pin 211C. The third power receiving device 200C sends the second electrical signal to the third power receiving device 200C through the feedback pin 212C. In this embodiment of this application, the third power supply device 100C and the third power receiving device 200C transmit the power supply signal through the power supply pin 111C and the power receiving pin 211C. The third power supply device 100C and the third power receiving device 200C transmit the power supply signal through the detection pin 112C and the feedback pin 212C.

In some possible implementations, a transmission path of the power supply signal may be reused between the third power supply device 100C and the third power receiving device 200C to transmit the first electrical signal. As shown in FIG. 7, the third power supply device 100C sends the first electrical signal to the third power receiving device 200C through the power supply pin 111C. The third power receiving device 200C receives the first electrical signal from the third power supply device 100C through the power receiving pin 211C. In some examples, the power supply signal and the first electrical signal may be separately transmitted at different time. In some examples, the power supply signal and the first electrical signal may be signals of different frequencies. The two types of signals are transmitted on a same transmission path, but are independent of each other and do not interfere with each other. For example, when a voltage of the power supply signal is 220 V, the frequency of the power supply signal is 50 Hz. The first electrical signal may be a signal greater than 50 Hz, for example, a signal with a frequency of thousands of Hz or higher. The two types of signals are transmitted to the third power receiving device 200C through the power supply pin 111C and the power receiving pin 211C. Then, the transmission characteristic circuit 230C in the third power receiving device 200C receives the first electrical signal, and the third power receiving unit 220C in the third power receiving device 200C receives the power supply signal.

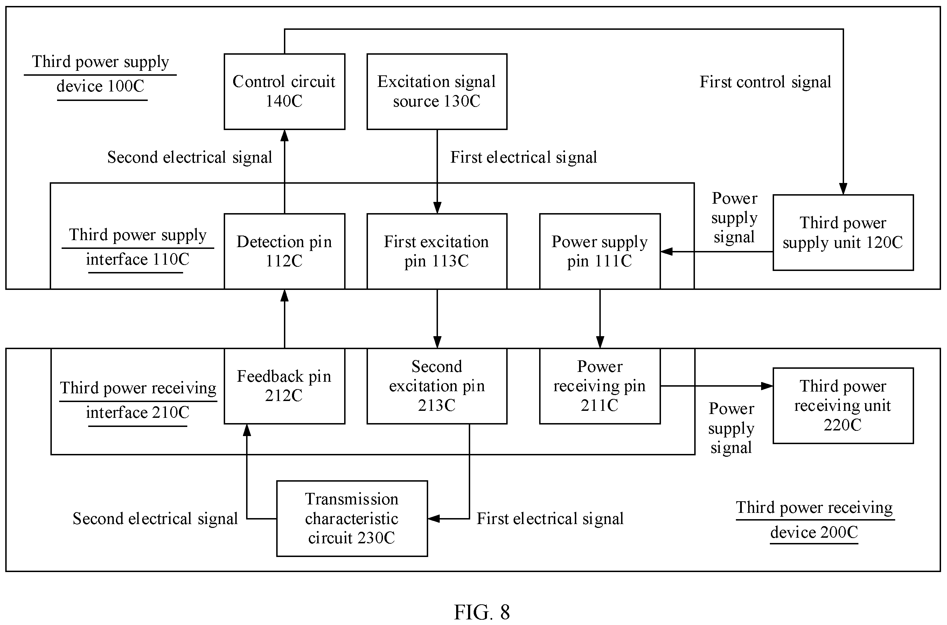

In some possible implementations, different transmission paths are used between the third power supply device 100C and the third power receiving device 200C to separately transmit the power supply signal and the first electrical signal. As shown in FIG. 8, the third power supply device 100C further includes a first excitation pin 113C. The third power supply device 100C sends the first electrical signal to the third power receiving device 200C through the first excitation pin 113C. The third power receiving interface 210C of the third power receiving device 200C further includes a second excitation pin 213C. The third power receiving device 200C receives the first electrical signal from the third power supply device 100C through the second excitation pin 213C. In this embodiment of this application, different transmission paths are used to separately transmit the power supply signal and the first electrical signal, and transmission of the power supply signal and the first electrical signal is completely independent. During actual application, in the third power supply interface 110C, the power supply pin 111C, the detection pin 112C, and the first excitation pin 113C may be integrated at one wiring end, and transmission is performed through a cable including a plurality of leads. Alternatively, in the third power supply interface 110C, the power supply pin 111C, the detection pin 112C, and the first excitation pin 113C may be disposed at different wiring ends, and transmission is separately performed through a plurality of independent cables.

In some possible implementations, as shown in FIG. 7 and FIG. 8, the third power supply device 100C further includes a third power supply unit 120C, an excitation signal source 130C, and a control circuit 140C. The control circuit 140C is separately coupled to the third power supply interface 110C and the third power supply unit 120C. The third power supply unit 120C is coupled to the third power supply interface 110C. The excitation signal source 130C is configured to send the first electrical signal to the third power receiving device 200C through the third power supply interface 110C. The control circuit 140C is configured to: input the second electrical signal at the third power supply interface 110C; and when the characteristic electrical signal parameter of the second electrical signal is within the preset range, output a first control signal to the third power supply unit 120C through the third power supply interface 110C, where the first control signal indicates to supply power to the third power receiving device 200C. The third power supply unit 120C is configured to send the power supply signal to the third power receiving device 200C through the third power supply interface 110C based on the first control signal.

For example, as shown in FIG. 7, the third power supply unit 120C provides the power supply signal for at least one third power receiving unit 120C in the third power receiving device 200C through the power supply pin 111C. The excitation signal source 130C sends the first electrical signal to the input of the transmission characteristic circuit 230C in the third power receiving device 200C through the power supply pin 111C. The control circuit 140C receives the second electrical signal from the third power receiving device 200C through the detection pin 112C. In some examples, when the characteristic electrical signal parameter of the second electrical signal is within the preset range, the control circuit 140C outputs the first control signal to the third power supply unit 120C, where the first control signal indicates the third power supply unit 120C to supply power to the third power receiving device 200C. In some examples, when the characteristic electrical signal parameter of the second electrical signal further indicates the power receiving parameter of the third power receiving device 200C, the control circuit 140C outputs the first control signal to the third power supply unit 120C, where the first control signal indicates the third power supply unit 120C to supply power to the third power receiving device 200C, and the first control signal further indicates the power supply parameter of the power supply signal. The third power supply unit 120C outputs, based on the first control signal, a power supply signal with a corresponding power supply parameter (or referred to as a power receiving parameter) to a corresponding power supply pin 111C, to supply power to the third power receiving device 200C.

In some examples, the control circuit 140C may be a processor. In some examples, the control circuit 140C may be a power management chip. In this embodiment of this application, a processor that performs control may be used as the control circuit 140C, to process the second electrical signal and generate a related first control signal to control generation of the power supply signal. However, a specific amount of data is required to parse the characteristic electrical signal parameter of the second electrical signal in the processor. In addition, as complexity of the characteristic electrical signal parameter increases, a data processing amount also increases. When the power management chip is used as the control circuit 140C, one or more power management chips are usually integrated in a power supply device, and the power management chip may be directly used to implement the foregoing control function without additionally disposing a control component. In addition, the power management chip may parse and obtain some electrical signal parameters, the power management chip is used to parse the electrical signal parameters, and a small amount of data is processed.

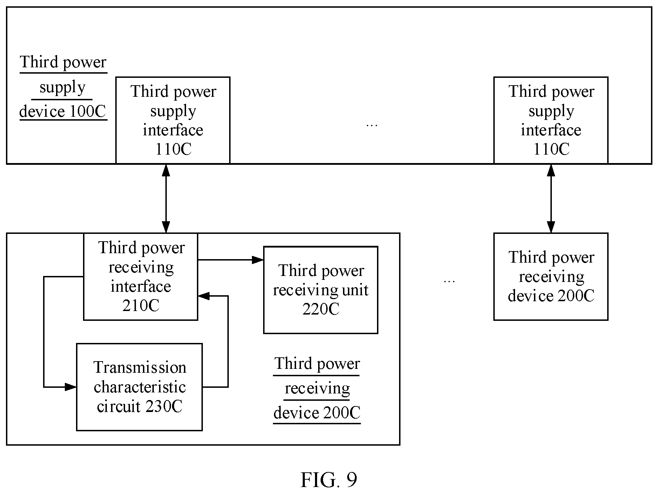

In some possible implementations, as shown in FIG. 9, the second device networking 1000B includes a plurality of third power receiving devices 200C. The third power supply device 100C includes a plurality of third power supply interfaces 110C. The plurality of third power supply interfaces 110C are used to be coupled to a plurality of corresponding third power receiving devices 200C. In this embodiment of this application, when the third power supply device 100C includes the plurality of third power supply interfaces 110C, the plurality of third power receiving devices 200C in the second device networking 1000B perform power supply negotiation and identification or the like by using transmission characteristic circuits 230C. In this case, no related power manager needs to be disposed for the plurality of third power receiving devices 200C in the second device networking 1000B, which can reduce more component costs and component area overheads.

In some examples, when the second device networking 1000B is applied to some scenarios that have a high precision requirement or are of great importance, or when power supply requirements of a plurality of third power receiving devices 200C are high, a corresponding excitation signal source 130C and a corresponding control circuit 140C may be disposed in the third power supply device 100C for each third power supply interface 110C, to ensure stability, reliability, and the like of power receiving by each third power receiving device 200C as much as possible.

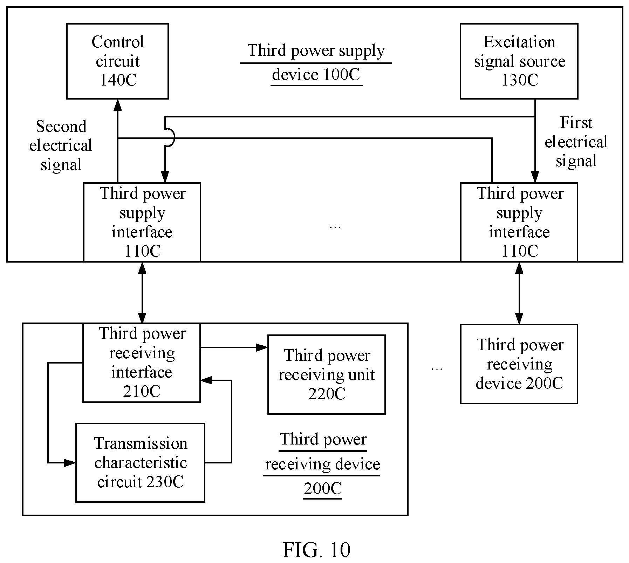

In some examples, as shown in FIG. 10, one excitation signal source 130C may be used to separately provide the first electrical signal for a plurality of different third power supply interfaces 110C. One or more control circuits 140C are used to receive corresponding second electrical signals from the plurality of third power supply interfaces 110C. In this embodiment of this application, when the transmission characteristic circuit 230C is used in the third power receiving device 200C to implement power supply identification and negotiation and the like, the control circuit 140C does not need to perform negotiation and interaction from a software perspective based on a power supply protocol, and only needs to parse the second electrical signal. In this case, one or more control circuits 140C may be used to process a plurality of second electrical signals, and there is no need to configure a corresponding power manager for each power receiving device. In this manner, one control circuit 140C is used to parse the second electrical signals received by two or more third power supply interfaces 110C, which can improve power supply reliability and safety while reducing component costs and component area overheads of the third power supply device 100C.

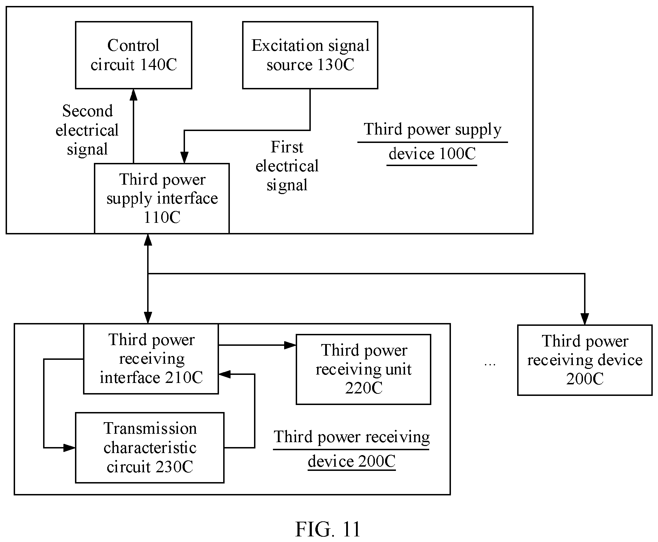

In some examples, as shown in FIG. 11, one excitation signal source 130C may be used to provide the first electrical signal for a third power supply interface 110C. The third power supply interface 110C is coupled to a plurality of third power receiving devices 200C via a branching connector X1. The transmission characteristic circuits 230C of the plurality of third power receiving devices 200C consistently change the characteristic electrical signal parameter of the first electrical signal. When the first electrical signal is separately sent to the third power receiving interfaces 210C of the plurality of third power receiving devices 200C through the first excitation pin 113C or the power supply pin 111C of the third power supply interface 110C via the branching connector X1, after the first electrical signal is received, the transmission characteristic circuit 230C of each third power receiving device 200C sends a corresponding second electrical signal to the branching connector X1 through the feedback pin 212C. The branching connector X1 transmits the plurality of second electrical signals to the detection pin 112C of the third power supply device 100C together. The control circuit 140C determines, based on whether a characteristic electrical signal parameter of an electrical signal that is obtained after the plurality of second electrical signals are combined is within the preset range, whether to output the power supply signal. In this embodiment of this application, a plurality of authenticated third power receiving devices 200C may receive power through a same third power supply interface 110C. When one or more of the plurality of third power receiving devices 200C are faulty, the faulty third power receiving device 200C may automatically stop receiving power. However, because the transmission characteristic circuit 230C of the faulty third power receiving device 200C is a hardware circuit, the transmission characteristic circuit 230C is not affected by a control plane. When the third power receiving device 200C is faulty, and the third power receiving device 200C is powered off, the corresponding transmission characteristic circuit 230C may still receive the first electrical signal sent by the third power supply device 100C and feed back the second electrical signal. In this case, the plurality of third power receiving devices 200C are coupled to a same third power supply interface 110C. If any third power receiving device 200C is faulty, power supply identification and negotiation processing performed by the third power supply device 100C on the third power receiving device 200C is not affected, and normal working of another third power receiving device 200C is not affected. In this embodiment of this application, in a case in which quantities of third power supply interfaces 110C, excitation signal sources 130C, and control circuits 140C are reduced, when the plurality of authenticated third power receiving devices 200C reuse a same third power supply interface 110C, if an authenticated third power receiving device 200C is faulty, running of another normal authenticated third power receiving device 200C is not affected. This ensures power supply reliability and safety while reducing component costs and component area overheads of the third power supply device 100C.

In some possible implementations, the first device networking 1000A or the second device networking 1000B may be base station communication networking, laboratory device networking, large workstation networking, smart home networking, terminal device networking, or the like.

For example, when the first device networking 1000A or the second device networking 1000B is the base station communication networking, the third power supply device 100C may be a dedicated power supply device. The third power receiving device 200C may be a transmission and reception point (transmission and reception point, TRP), a remote radio unit (remote radio unit, RRU), an active antenna unit (active antenna unit, AAU), or a baseband unit (baseband unit, BBU) (which may also be referred to as a digital unit (digital unit, DU)) of a disaggregated base station, a broadband network service gateway (broadband network gateway, BNG), an aggregation switch, a non-3GPP access device, a relay station, an access point, or the like.

For example, when the first device networking 1000A or the second device networking 1000B is the smart home networking, the third power supply device 100C may be a dedicated power supply device, or may be a smart home management device. The third power receiving device 200C may be a router, a computer, a refrigerator, a display, or the like.

For example, when the first device networking 1000A or the second device networking 1000B is the base station communication networking or the smart home networking, the third power supply interface 110C and the third power receiving interface 210C may be power-integrated network cables, for example, RJ45 connectors, and a pin used to transmit the second electrical signal is integrated into the RJ45 connectors as the detection pin 112C, the feedback pin 212C, or the like. In addition, the third power supply interface 110C and the third power receiving interface 210C may be direct current (direct current, DC) quick-connect plugs or the like.

For example, when the first device networking 1000A or the second device networking 1000B is the terminal device networking, the third power supply device 100C may be a dedicated power supply device, or may be an electronic processing device having a power supply function. For example, the third power supply device 100C may be a notebook computer, a desktop computer, a tablet computer, a mobile phone, a smart display, a host chassis, a sound system, or the like. The third power receiving device 200C may be a notebook computer, a mobile phone, a smartwatch, a tablet computer, an electronic stylus, a display, a sound system, a wireless headset box, VR glasses, or the like. In this case, the third power supply device 100C and the third power receiving device 200C may be USB interfaces, direct current quick-connect plugs, RJ45 interfaces, or the like. For example, type-c interfaces of USB interfaces are used. In some examples, the type-c interface is of a bisymmetric structure, and pins on one side of the type-c interface are all symmetrically duplicated, to perform a transceiver function. One cc pin of the dual-side type-c interface may be separately used as the detection pin 112C and the feedback pin 212C to transmit the first electrical signal. The other cc pin of the dual-side type-c interface may be separately used as the first excitation pin 113C and the second excitation pin 213C to transmit the second electrical signal. The vbus pin of the type-c interface is separately used as the power supply pin 111C and the power receiving pin 211C to transmit the power supply signal.

In some possible cases, after the third power supply interface 110C of the third power supply device 100C is coupled to a power receiving interface of a power receiving device that does not include the transmission characteristic circuit 230C, the third power supply interface 110C cannot receive the second electrical signal, or the detection pin 112C of the third power supply interface 110C may receive an electrical signal that is not the second electrical signal. In this case, the third power supply device 100C may not provide the power supply signal for the power receiving device that does not include the transmission characteristic circuit 230C, or the third power supply device 100C may provide a power supply signal lower than that of the third power receiving device 200C for the power receiving device that does not include the transmission characteristic circuit 230C, to ensure that a power supply behavior does not cause a power supply safety problem or the like.

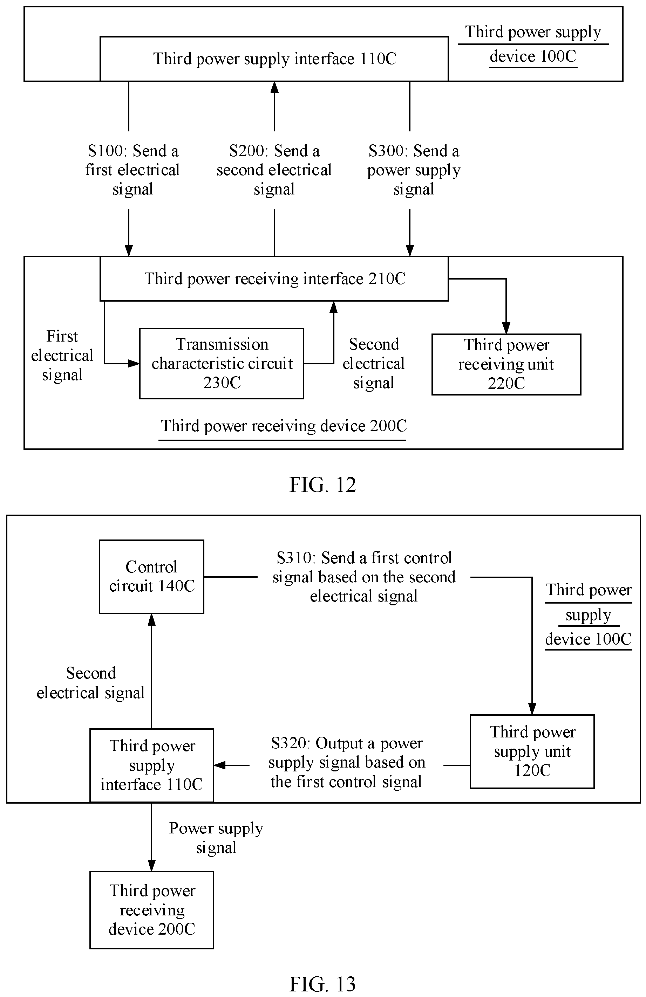

Based on the first device networking 1000A or the second device networking 1000B that is of the structure shown in FIG. 5, FIG. 6A and FIG. 6B, FIG. 7, FIG. 8, FIG. 9, FIG. 10, or FIG. 11, a charging method that includes step S100 to step S300 and that is shown in FIG. 12 may be performed.

S100: The third power supply device 100C sends the first electrical signal to the third power receiving device 200C.

For example, as shown in FIG. 5, FIG. 7, FIG. 8, FIG. 9, FIG. 10, and FIG. 11, the third power supply device 100C sends the first electrical signal to the third power receiving device 200C through the third power supply interface 110C in response to the third power supply interface 110C being coupled to the third power receiving interface 210C of the third power receiving device 200C. In this embodiment of this application, in a design of a power supply solution, after a power supply interface is coupled to a power receiving interface, a power supply device may automatically supply power to a power receiving device (or automatically start to perform power supply identification and negotiation operations and then supply power). Therefore, design is usually performed in the power supply device and/or the power receiving device, to implement the foregoing self-response function. For example, a level change of a pin at an interface may be detected by using the control circuit 140C, to determine that the third power supply interface 110C is coupled to the third power receiving interface 210C.

S200: The third power receiving device 200C sends the second electrical signal to the third power supply device 100C.

For example, as shown in FIG. 5, after receiving the first electrical signal, the transmission characteristic circuit 230C of the third power receiving device 200C transmits the first electrical signal, and then sends the second electrical signal to the third power supply device 100C.

For example, as shown in FIG. 7 and FIG. 8, the excitation signal source 130C of the third power supply device 100C sends the first electrical signal through the power supply pin 111C or the first excitation pin 113C. The third power receiving device 200C receives the first electrical signal through the power receiving pin 211C or the second excitation pin 213C. After the first electrical signal is transmitted through the transmission characteristic circuit 230C, the third power receiving device 200C outputs the second electrical signal through the feedback pin 212C. In this embodiment of this application, the transmission characteristic of the transmission characteristic circuit 230C is used to change the characteristic electrical signal parameter of the first electrical signal to obtain the second electrical signal. Different characteristic electrical signal parameters of the first electrical signal may be changed depending on different transmission characteristic circuits 230C, and a change degree of the characteristic electrical signal parameter also varies depending on the different transmission characteristic circuits 230C.

For example, as shown in FIG. 7 and FIG. 8, after the third power receiving device 200C sends the second electrical signal through the feedback pin 212C, the third power supply device 100C may receive the second electrical signal from the detection pin 112C.

For example, as shown in FIG. 7 and FIG. 8, the control circuit 140C of the third power supply device 100C receives the second electrical signal through the detection pin 112C.

In some possible implementations, the characteristic electrical signal parameter of the second electrical signal indicates a device identifier of the third power receiving device 200C. In this embodiment of this application, power supply identification and negotiation between the third power supply device 100C and the third power receiving device 200C are implemented via hardware by using the transmission characteristic circuit 230C. The characteristic electrical signal parameter of the first electrical signal may be changed by using the transmission characteristic circuit 230C to obtain the second electrical signal. In this case, the characteristic electrical signal parameter of the second electrical signal may indicate the device identifier of the third power receiving device 200C.

In some possible implementations, the characteristic electrical signal parameter of the second electrical signal further indicates a power receiving parameter of the third power receiving device 200C. In this embodiment of this application, in some application scenarios, the power supply device further needs to provide different power supply signals for different power receiving devices, to match power supply requirements of the different power receiving devices. In this case, the transmission characteristic circuit 230C may be designed, so that the characteristic electrical signal parameter of the second electrical signal may further indicate a power receiving parameter of a corresponding third power receiving device 200C.

In some possible implementations, the characteristic electrical signal parameter includes at least one of the following: a phase change characteristic, an amplitude change characteristic, and a frequency change characteristic.

For example, when the characteristic electrical signal parameter includes the phase change characteristic, the transmission characteristic circuit 230C may change a phase of the first electrical signal to a specific extent to obtain the second electrical signal. When the phase of the first electrical signal is known, the third power supply device 100C may determine, based on whether a value of a phase of the second electrical signal is within a preset range, whether the third power receiving device 200C is an authenticated power receiving device. For example, the phase of the first electrical signal is adjusted based on the circuit in FIG. 6A and the circuit in FIG. 6B. In addition, when determining that the third power receiving device 200C is the authenticated power receiving device, the third power supply device 100C may further determine the power receiving parameter of the third power receiving device 200C based on the value of the phase of the second electrical signal. When the characteristic electrical signal parameter includes the amplitude change characteristic and/or the frequency change characteristic, for a technical principle and a technical effect of determining the power receiving parameter based on a value corresponding to the amplitude change characteristic and/or the frequency change characteristic, refer to related descriptions of the foregoing phase change characteristic. Details are not described herein again.

For example, when the characteristic electrical signal parameter includes the frequency change characteristic, the transmission characteristic circuit 230C may alternatively be used as a filter. The first electrical signal is a signal with a preset frequency value, and the transmission characteristic circuit 230C is used to perform filtering processing on the first electrical signal to obtain the second electrical signal. Whether a corresponding third power receiving device 200C is the authenticated power receiving device is determined based on a frequency of the second electrical signal. In addition, when determining that the third power receiving device 200C is the authenticated power receiving device, the third power supply device 100C may further determine the power receiving parameter of the third power receiving device 200C based on a value of the frequency of the second electrical signal obtained after filtering processing. In some examples, the transmission characteristic circuit 230C may be a filter circuit having a band-pass function, that is, allows a signal of a specific frequency to pass through while filtering out a signal of another frequency. In some examples, the transmission characteristic circuit 230C may be a filter circuit having a filtering function, that is, filters out a signal of a specific frequency while allowing a signal of another frequency to pass through.

In some possible implementations, the characteristic electrical signal parameter includes at least one of a time-varying characteristic or a noise characteristic.

For example, when the characteristic electrical signal parameter includes the time-varying characteristic, in some examples, in time during which the first electrical signal is transmitted on the transmission characteristic circuit 230C, at least one of a phase, an amplitude, and a frequency of the output second electrical signal may change differently in different time periods due to influence of a component parameter of the transmission characteristic circuit 230C. For example, when the first electrical signal is just input to the transmission characteristic circuit 230C, a load of the transmission characteristic circuit 230C consumes the first electrical signal to a specific extent, so that an amplitude of a second electrical signal that is just output is lower than that of a subsequently output second electrical signal, or the like. In some examples, the transmission characteristic circuit 230C may be used to perform delay processing on the first electrical signal to obtain the second electrical signal. Whether the third power receiving device 200C is the authenticated power receiving device is determined based on a delay level of the second electrical signal. When the third power receiving device 200C is the authenticated power receiving device, the power receiving parameter or the like may be determined based on the delay level of the second electrical signal.

For example, when the characteristic electrical signal parameter includes the time-varying characteristic, the transmission characteristic circuit 230C may be a noise generation circuit. A specific noise signal is added to the first electrical signal by using the transmission characteristic circuit 230C. The third power supply device 100C determines, based on the noise signal on the second electrical signal, whether the third power receiving device 200C is the authenticated power receiving device. In addition, a corresponding power receiving parameter may be determined based on a signal parameter of the noise signal. In some examples, a specific reflection coefficient may be designed for the transmission characteristic circuit 230C to generate a specific reflection signal that is used as the noise signal. In an actual component design, to ensure normal transmission of a signal, impedance matching design needs to be performed in a circuit. Impedance matching (impedance matching) may be understood as that characteristic impedance of a transmission line is equal in magnitude and identical in phase to impedance of a connected load, which is referred to as that an input or an output of the transmission line is in an impedance matching state. This is referred to as impedance matching for short. When first impedance is equal to second impedance, a radio frequency signal may be transmitted without reflection on the transmission path. However, when transmission impedance is not equal to load impedance, a signal may be reflected on the transmission path, an interference signal is generated, and signal transmission efficiency is reduced. Different reflection coefficients result in different reflected signals. Characteristic impedance of the transmission characteristic circuit 230C is designed, so that impedance matching cannot be implemented for transmission of the first electrical signal on the transmission characteristic circuit 230C, and a corresponding reflection coefficient may be obtained. The third power supply device 100C determines, based on a corresponding reflected signal in the second electrical signal, whether the third power receiving device 200C is the authenticated power receiving device. Alternatively, a corresponding power receiving parameter or the like may be determined based on a signal parameter of the reflected signal.

S300: The third power supply device 100C sends the power supply signal to the third power receiving device 200C.

In some possible implementations, when the characteristic electrical signal parameter of the second electrical signal is within the preset range, the third power supply device 100C sends the power supply signal to the third power receiving device 200C. In some examples, the characteristic electrical signal parameter of the second electrical signal may indicate the device identifier of the third power receiving device 200C. Therefore, when the characteristic electrical signal parameter of the second electrical signal is within the preset range, it indicates that the third power receiving device 200C is the authenticated power receiving device, and the third power supply device 100C completes an operation of power supply identification with the third power receiving device 200C, and provides the power supply signal for the third power receiving device 200C. In some examples, the characteristic electrical signal parameter of the second electrical signal may indicate the power receiving parameter of the third power receiving device 200C. Therefore, the power supply parameter or the like of the power supply signal may be determined based on the value of the characteristic electrical signal parameter or the like of the second electrical signal.

In some possible implementations, step S300 may include the following sub-operations of step S310 to step S320 shown in FIG. 13.

S310: Output a first control signal based on the second electrical signal.

In some possible implementations, as shown in FIG. 7 and FIG. 8, after inputting the second electrical signal, the control circuit 140C outputs the first control signal based on the characteristic electrical signal parameter of the second electrical signal. The first control signal indicates the third power supply unit 120C to send the power supply signal to the third power receiving device 200C.

For example, as shown in FIG. 9 and FIG. 10, the control circuit 140C may receive second electrical signals of different third power receiving devices 200C from corresponding third power supply interfaces 110C, and output the corresponding first control signal to the third power supply unit 120C based on the second electrical signal. Each first control signal indicates the third power supply unit 120C to output the power supply signal to a corresponding third power supply interface 110C, to supply power to a corresponding third power receiving device 200C through the third power supply interface 110C.

For example, as shown in FIG. 11, the control circuit 140C may send the first electrical signal to the plurality of third power receiving devices 200C through one third power supply interface 110C and via the branching connector X1, and receive the plurality of second electrical signals fed back by the plurality of third power receiving devices 200C. Because the transmission characteristic circuits 230C of the plurality of third power receiving devices 200C consistently change the characteristic electrical signal parameter of the first electrical signal, the control circuit 140C determines, based on value ranges of the characteristic electrical signal parameters of the plurality of second electrical signals, whether all third power receiving devices 200C are authenticated power receiving devices. This solution may be applied to a scenario in which all power receiving devices are the authenticated power receiving devices. When an authenticated power receiving device is faulty, the faulty power receiving device may be automatically powered off, but the transmission characteristic circuit 230C of the faulty power receiving device may still normally transmit the first electrical signal. The third power supply device 100C may still perform power supply identification and the like on all third power receiving devices 200C on the third power supply interfaces 110C. A fault in a third power receiving device 200C does not affect power receiving of another third power receiving device 200C that works normally.

S320: Output the power supply signal based on the first control signal.

In some possible implementations, as shown in FIG. 7 and FIG. 8, the third power supply unit 120C outputs the power supply signal to the corresponding third power supply interface 110C based on the first control signal. In some examples, when the first control signal indicates the device identifier of the third power receiving device 200C, the third power supply unit 120C may output a power supply signal with a preset uniform parameter, or the third power supply unit 120C may output a power supply signal with a preset power supply parameter that corresponds to the device identifier. In some examples, when the first control signal indicates the power receiving parameter of the third power receiving device 200C, the third power supply unit 120C may output, based on the first control signal, a power supply signal with a corresponding power supply parameter, to match a power receiving requirement of the third power receiving device 200C.

In this embodiment of this application, the transmission characteristic circuit 230C is disposed in the third power receiving device 200C, and the transmission characteristic of the transmission characteristic circuit 230C indicates different device identifiers and/or power receiving parameters. The third power supply device 100C may determine the device identifier and/or the power receiving parameter of the third power receiving device 200C by processing the second electrical signal, to distinguish between the authenticated device and an unauthenticated device, and further complete negotiation on a power supply requirement. According to the foregoing embodiment, a power manager does not need to be disposed in the third power receiving device 200C, to reduce component costs and component area overheads of the third power receiving device 200C. In addition, when a plurality of third power supply interfaces 110C are disposed in the third power supply device 100C, power is supplied to different third power receiving devices 200C through the plurality of third power supply interfaces 110C, and one excitation signal source 130C and/or one control circuit 140C may be reused between the plurality of third power supply interfaces 110C. This reduces component costs and component area overheads of the third power supply device 100C. In the foregoing solution, power supply reliability and safety of a device can be further ensured while component costs and component area overheads of the first device networking 1000A or the second device networking 1000B are reduced.

Embodiments of this application further provide a computer-readable storage medium. The computer-readable storage medium includes instructions. When the instructions are run on device networking or a power supply device that is of the structure described in the embodiment of FIG. 5, FIG. 6A and FIG. 6B, FIG. 7, FIG. 8, FIG. 9, FIG. 10, or FIG. 11, the device networking or the third power supply device is enabled to perform the charging method described in the embodiments of FIG. 12 and FIG. 13.

The processor in this embodiment of this application may be a chip. For example, the processor may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. A part or all of the modules may be selected based on an actual requirement, to achieve objectives of the solutions in embodiments.

In addition, functional modules in embodiments of this application may be integrated into one device, or each of the modules may exist alone physically, or two or more modules are integrated into one device.

All or a part of the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply device, comprising a power supply interface, wherein the power supply device is configured to:
send a first electrical signal to the power receiving device through the power supply interface in response to a power receiving device being coupled to the power supply interface;
receive a second electrical signal from the power receiving device through the power supply interface, wherein the second electrical signal is the first electrical signal transmitted through the power receiving device; and
when a characteristic electrical signal parameter of the second electrical signal is within a preset range, send a power supply signal to the power receiving device through the power supply interface, wherein the characteristic electrical signal parameter is a characteristic electrical signal parameter affected by a transmission characteristic of the power receiving device.

2. The power supply device according to claim 1, wherein the characteristic electrical signal parameter of the second electrical signal further indicates a power receiving parameter of the power receiving device, and the power supply device is further configured to:
determine a value of a power supply parameter of the power supply signal based on the characteristic electrical signal parameter of the second electrical signal.

3. The power supply device according to claim 1 or 2, wherein the characteristic electrical signal parameter comprises at least one of the following: a phase change characteristic, an amplitude change characteristic, and a frequency change characteristic.

4. The power supply device according to any one of claims 1 to 3, wherein the characteristic electrical signal parameter comprises at least one of a time-varying characteristic or a noise characteristic.

5. The power supply device according to any one of claims 1 to 4, wherein the power supply device comprises a plurality of power supply interfaces, and the plurality of power supply interfaces are used to be coupled to a plurality of corresponding power receiving devices.

6. The power supply device according to any one of claims 1 to 5, wherein the power supply interface comprises a power supply pin and a detection pin, the power supply device sends the power supply signal to the power receiving device through the power supply pin, and the power supply device receives the second electrical signal from the power receiving device through the detection pin.

7. The power supply device according to claim 6, wherein the power supply device sends the first electrical signal to the power receiving device through the power supply pin.

8. The power supply device according to claim 6, wherein the power supply device further comprises an excitation pin, and the power supply device sends the first electrical signal to the power receiving device through the excitation pin.

9. The power supply device according to any one of claims 1 to 8, wherein the power supply device further comprises an excitation signal source, a control circuit, and a power supply unit, the control circuit is separately coupled to the power supply interface and the power supply unit, and the power supply unit is coupled to the power supply interface;
the excitation signal source is configured to send the first electrical signal to the power receiving device through the power supply interface;
the control circuit is configured to: input the second electrical signal at the power supply interface; and when the characteristic electrical signal parameter of the second electrical signal is within the preset range, output a first control signal to the power supply unit through the power supply interface, wherein the first control signal indicates to supply power to the power receiving device; and
the power supply unit is configured to send the power supply signal to the power receiving device through the power supply interface based on the first control signal.

10. The power supply device according to claim 9, wherein the control circuit is a power manager.

11. A power receiving device, comprising a transmission characteristic circuit and a power receiving interface, wherein an input of the transmission characteristic circuit and an output of the transmission characteristic circuit are separately coupled to the power receiving interface, and the power receiving device is configured to:
receive a first electrical signal from a power supply device through the power receiving interface at the input of the transmission characteristic circuit, and transmit the first electrical signal by using the transmission characteristic circuit;
send a second electrical signal to the power supply device through the power receiving interface at the output of the transmission characteristic circuit, wherein the second electrical signal is the first electrical signal transmitted through the transmission characteristic circuit, and a transmission characteristic of the transmission characteristic circuit is used to change a characteristic electrical signal parameter of the first electrical signal to obtain the second electrical signal; and
receive a power supply signal from the power supply device through the power receiving interface.

12. The power receiving device according to claim 11, wherein the transmission characteristic of the transmission characteristic circuit further indicates a power receiving parameter of the power receiving device.

13. The power receiving device according to claim 11 or 12, wherein the characteristic electrical signal parameter comprises at least one of the following: a phase change characteristic, an amplitude change characteristic, and a frequency change characteristic.

14. The power receiving device according to any one of claims 11 to 13, wherein the characteristic electrical signal parameter comprises at least one of a time-varying characteristic or a noise characteristic.

15. The power receiving device according to any one of claims 11 to 14, wherein the transmission characteristic circuit comprises at least one of the following components: an equivalent capacitor, an equivalent resistor, and an equivalent inductor.

16. The power receiving device according to any one of claims 11 to 15, wherein the power receiving interface comprises a power receiving pin and a feedback pin, the power receiving device receives the power supply signal from the power supply device through the power receiving pin, and the power receiving device sends the second electrical signal to the power supply device through the feedback pin.

17. The power receiving device according to claim 16, wherein the power receiving device receives the first electrical signal from the power supply device through the power receiving pin.

18. The power receiving device according to claim 16, wherein the power receiving device further comprises an excitation pin, and the power receiving device receives the first electrical signal from the power supply device through the excitation pin.

19. A charging method, based on a power supply device, wherein the method comprises:
sending a first electrical signal to a power receiving device;
receiving a second electrical signal from the power receiving device, wherein the second electrical signal is the first electrical signal transmitted through the power receiving device; and
when a characteristic electrical signal parameter of the second electrical signal is within a preset range, sending a power supply signal to the power receiving device, wherein the characteristic electrical signal parameter is a characteristic electrical signal parameter affected by a transmission characteristic of the power receiving device.

20. The charging method according to claim 19, wherein the characteristic electrical signal parameter of the second electrical signal further indicates a power receiving parameter of the power receiving device, and the method further comprises:
determining a value of a power supply parameter of the power supply signal based on the characteristic electrical signal parameter of the second electrical signal.

21. The charging method according to claim 19 or 20, wherein the characteristic electrical signal parameter comprises at least one of the following: a phase change characteristic, an amplitude change characteristic, and a frequency change characteristic.

22. The charging method according to any one of claims 19 to 21, wherein the characteristic electrical signal parameter comprises at least one of a time-varying characteristic or a noise characteristic.

23. The charging method according to any one of claims 19 to 22, wherein sending the power supply signal to the power receiving device comprises:
obtaining a first control signal based on the second electrical signal, wherein the first control signal indicates to supply power to the power receiving device; and
sending the power supply signal to the power receiving device based on the first control signal.

24. A charging method, based on a power receiving device, wherein the power receiving device comprises a transmission characteristic circuit, and the method comprises:
receiving a first electrical signal, transmitting the first electrical signal by using the transmission characteristic circuit, and sending a second electrical signal to a power supply device, wherein the second electrical signal is the first electrical signal transmitted through the transmission characteristic circuit, and a transmission characteristic of the transmission characteristic circuit is used to change a characteristic electrical signal parameter of the first electrical signal to obtain the second electrical signal; and
receiving a power supply signal from the power supply device.

25. The charging method according to claim 24, wherein the transmission characteristic of the transmission characteristic circuit further indicates a power receiving parameter of the power receiving device.

26. The charging method according to claim 24 or 25, wherein the characteristic electrical signal parameter comprises at least one of the following: a phase change characteristic, an amplitude change characteristic, and a frequency change characteristic.

27. The charging method according to any one of claims 24 to 26, wherein the characteristic electrical signal parameter comprises at least one of a time-varying characteristic or a noise characteristic.

28. Device networking, comprising a power supply device and a power receiving device, wherein the power supply device comprises a power supply interface, the power receiving device comprises a power receiving interface and a transmission characteristic circuit, the power supply interface is coupled to an input and an output of the transmission characteristic circuit through the power receiving interface, and the power supply device is configured to:
send a first electrical signal to the input of the transmission characteristic circuit through the power supply interface in response to the power receiving interface being coupled to the power supply interface;
receive a second electrical signal from the output of the transmission characteristic circuit through the power supply interface, wherein the second electrical signal is the first electrical signal transmitted through the transmission characteristic circuit; and
when a characteristic electrical signal parameter of the second electrical signal is within a preset range, send a power supply signal to the power receiving device through the power supply interface, wherein the characteristic electrical signal parameter is an electrical signal parameter affected by a transmission characteristic of the transmission characteristic circuit.

29. A computer-readable storage medium, wherein the computer-readable storage medium comprises instructions, and when the instructions are run on a power supply device, the power supply device is enabled to perform the following charging method:
sending a first electrical signal to a power receiving device;
receiving a second electrical signal from the power receiving device, wherein the second electrical signal is the first electrical signal transmitted through the power receiving device; and
when a characteristic electrical signal parameter of the second electrical signal is within a preset range, sending a power supply signal to the power receiving device, wherein the characteristic electrical signal parameter is a characteristic electrical signal parameter affected by a transmission characteristic of the power receiving device.
